(19) Europäisches Patentamt / European Patent Office / Office européen des brevets

(11) **EP 1 206 091 B1**

(12) **FASCICULE DE BREVET EUROPEEN**

(45) Date de publication et mention
de la délivrance du brevet:
**10.01.2007 Bulletin 2007/02**

(51) Int Cl.:
***H04L 25/02*** *(2006.01)*

(21) Numéro de dépôt: **00123489.7**

(22) Date de dépôt: **07.11.2000**

(54) **Procédé et dispositif d'estimation de canal, en particulier pour un téléphone mobile cellulaire**

Verfahren und Vorrichtung zur Kanalschätzung, insbesondere für eine Mobiltelefon

Method and apparatus of channel estimation, particularly for a mobile phone

(84) Etats contractants désignés:
**DE FR GB IT**

(43) Date de publication de la demande:
**15.05.2002 Bulletin 2002/20**

(73) Titulaire: **STMicroelectronics N.V.
1077 XX Amsterdam (NL)**

(72) Inventeur: **Bonhomme, Corinne
01630 Sergy (FR)**

(74) Mandataire: **Casalonga, Axel
Bureau Casalonga & Josse
Bayerstrasse 71/73
80335 München (DE)**

(56) Documents cités:
**US-A- 5 251 233**

- **OTSUKI S ET AL: "PERFORMANCE OF MODULATION-LEVEL-CONTROLLED ADAPTIVE MODULATION SYSTEMS" ELECTRONICS & COMMUNICATIONS IN JAPAN, PART I - COMMUNICATIONS, US, SCRIPTA TECHNICA. NEW YORK, vol. 79, no. 7, 1 juillet 1996 (1996-07-01), pages 81-93, XP000696376 ISSN: 8756-6621**

## Description

L'invention concerné la transmission d'informations numériques, notamment mais non exclusivement dans le domaine du téléphone mobile cellulaire tel que celui prévu dans le système GSM, ou encore dans son extension EDGE, ou bien dans les systèmes UMTS.

L'invention concerne plus particulièrement l'estimation (sondage) de canal, c'est-à-dire l'estimation de la réponse impulsionnelle d'un canal de transmission véhiculant des informations depuis un émetteur jusqu'à un récepteur, via un moyen de propagations. Par exemple, le document US 5 251 233 propose une méthode pour déterminer les coefficients correspondant à la réponse impulsionnelle estimée d'un canal.

Ce moyen de propagation peut être l'air dans le cas des téléphones mobiles cellulaires, ou bien tout autre moyen de propagation tel qu'un câble, par exemple, dans d'autres applications.

Un facteur fondamental de limitation des performances d'un système de communication numérique est le phénomène bien connu de l'homme du métier, dénommé "interférence inter-symboles".

Une telle interférence inter-symboles provoque au niveau du récepteur une occupation temporelle de chaque symbole transmis ("bit", par exemple), supérieure à la durée initiale dudit symbole (encore appelée "temps bit", par exemple).

En d'autres termes, le signal reçu à un instant donné ne dépend pas d'un seul symbole ("bit", par exemple), mais également des autres symboles (bits) émis qui s'étendent sur des durées supérieures à celles d'un temps symbole (temps bit).

En pratique, le signal reçu à un instant donné dépend du symbole considéré, mais également essentiellement des symboles adjacents.

Les causes des interférences inter-symboles sont multiples.

L'une d'entre elles est due notamment aux propagations multiples du signal entre l'émetteur et le récepteur lorsque le signal est réfléchi ou diffracté par différents obstacles, conduisant à la réception à plusieurs copies du signal, mutuellement décalées temporellement.

Lors des communications avec interférence entre symboles, se pose le problème d'estimer la réponse impulsionnelle du canal de transmission. De la qualité de cette estimation, dépend la capacité que l'on a à supprimer l'interférence entre symboles, et donc à prendre les décisions correctes sur les symboles émis.

Généralement, l'estimation de la réponse impulsionnelle du canal, ou plus simplement "estimation de canal", s'effectue, dans le domaine du téléphone GSM notamment, en utilisant des techniques de moindres carrés et en utilisant une séquence de symboles prédéterminée et connue de l'émetteur et du récepteur, et dénommée par l'homme du métier sous le vocable de "séquence d'apprentissage" ("training sequence"). Cette séquence d'apprentissage est présente au sein de chaque train ("burst") de symboles émis. Lorsque les caractéristiques du canal sont suffisamment bien estimées, on utilise les coefficients estimés de la réponse impulsionnelle du canal dans un traitement dit "d'égalisation", également bien connu de l'homme du métier, pour déchiffrer le signal reçu, c'est-à-dire retrouver les valeurs logiques des symboles (données) émis dans le train.

Le traitement d'égalisation est classiquement suivi par les traitements dits "de décodage de canal" destinés à corriger autant que faire ce peu, d'éventuelle; erreurs. Le décodage de canal est lui-même classiquement suivi d'un autre décodage, dit "décodage de source", destiné à reconstituer les informations (parole, par exemple) initialement codées au niveau de l'émetteur.

Comme indiqué plus haut, la qualité de réception, exprimée généralement par le taux d'erreur binaire (BER : Binary Error Rate en langue anglaise) dépend beaucoup de la qualité d'estimation du canal.

L'un des paramètres important pour la qualité de l'estimation réside dans l'étalement du canal. Cet étalement du canal représente la durée de la réponse de canal à estimer et fixe le nombre de coefficients de la réponse impulsionnelle du canal.

En pratique, selon l'environnement dans lequel se situe le téléphone, les trajets peuvent être plus ou moins étalés. Ainsi, le trajet le plus étalé se rencontre dans les environnements collineux et 7 à 8 coefficients sont alors nécessaires pour estimer correctement la réponse impulsionnelle du canal. Par contre, il existe des trajets à moins fort étalement tels que les trajets dits statiques, c'est-à-dire des trajets directs sans réflexion pour lesquels 4 à 5 coefficients seulement sont nécessaires pour une bonne estimation de la réponse impulsionnelle du canal de transmission.

Par ailleurs, les trajets urbains, qui représentent pour les systèmes de téléphonie mobile cellulaire, les cas les plus fréquents, nécessitent 5 à 6 coefficients pour estimer correctement la réponse impulsionnelle du canal de transmission.

L'estimation de la réponse impulsionnelle du canal s'effectue à intervalles réguliers et, pour effectuer cette estimation, on définit actuellement à l'avance la longueur du canal, c'est-à-dire que l'on fixe a priori un nombre de coefficients pour la réponse impulsionnelle du canal. A titre d'exemple, pour le GSM, on fixe le nombre de coefficients à une valeur maximale afin de satisfaire les recommandations les plus sévères telles que celles fixées dans la norme ETSI EN 300 910 V8.5 (Juillet 2000) intitulée Digital cellular telecommunications systems (Phase 2+) ; Radio transmission and reception (GSM 05.05 Version 8.5.0 Release 1999).

En d'autres termes, on prend comme nombre de coefficients de la réponse impulsionnelle du canal de transmission celui correspondant au trajet présentant le plus fort étalement, c'est-à-dire un terrain collineux.

Cependant, fixer la valeur du nombre de coefficients de la réponse impulsionnelle du canal à sa valeur maximale permet de réussir l'égalisation pour les canaux les plus étalés mais dégrade de manière sensible les performances pour les canaux à faible étalement, tels ceux que l'on rencontre dans les milieux urbains.

L'invention vise à apporter une solution à ce problème.

L'invention vise à améliorer l'estimation du canal en discriminant les multi-trajets peu étalés dans le temps et ceux très étalés. En d'autres termes, l'invention propose d'adapter le nombre de coefficients de la réponse impulsionnelle au type de multi-trajets.

A cet égard, l'invention propose, pour discriminer les multi-trajets peu étalés de ceux fortement étalés, d'évaluer en vue de l'estimation de la réponse impulsionnelle d'un canal de transmission, le nombre utile de coefficients de cette réponse impulsionnelle en fonction des caractéristiques réelles du canal de transmission. En particulier, l'invention propose d'utiliser un paramètre d'étalement du canal de transmission, plus couramment connu par l'homme du métier sous sa dénomination anglo-saxonne de "delay spread".

L'invention propose ainsi un procédé d'estimation de la réponse impulsionnelle d'un canal de transmission d'informations, selon un mode de mise en oeuvre duquel on effectue une première estimation de la réponse impulsionnelle en utilisant une valeur maximale prédéterminée pour le nombre de coefficients de cette réponse impulsionnelle, puis on évalue un paramètre d'étalement temporel du canal de transmission de façon à évaluer ledit nombre utile de coefficients et on élabore une estimation finale de la réponse impulsionnelle du canal de transmission en tenant compte de ce nombre utile de coefficients.

Cette première estimation s'effectue de façon classique par toute méthode connue de l'homme du métier et s'effectue en pratique sur le nombre maximum de coefficients, par exemple le nombre de coefficients utilisés pour un trajet collineux.

Bien entendu, si, après l'évaluation du paramètre d'étalement temporel, on se rend compte que l'on est effectivement en présence d'un trajet collineux, l'élaboration de l'estimation finale de la réponse impulsionnelle du canal consiste alors simplement à conserver la première estimation.

Par contre, si la valeur du paramètre d'étalement temporel révèle que le téléphone se situe dans un environnement du type urbain ou statique par exemple et par conséquent, le nombre de coefficients utilisés dans la première estimation est inappropriée, l'estimation finale de la réponse impulsionnelle sera différente de cette première estimation.

Deux variantes de mise en oeuvre sont alors possibles pour élaborer cette estimation finale.

Selon une première variante, on élabore ladite estimation finale en effectuant une nouvelle estimation utilisant ledit nombre utile de coefficients.

Cette nouvelle estimation peut également s'effectuer par toute méthode classique connue de l'homme du métier.

Selon une deuxième variante, on élabore l'estimation finale en corrigeant la première estimation par une annulation d'un nombre de coefficients égal à la différence entre ladite valeur maximale et ledit nombre utile, les coefficients annulés étant ceux associés aux versions du signal transmis, les plus retardés temporellement.

En d'autres termes, alors que dans la première variante évoquée, la nouvelle estimation de la réponse impulsionnelle est effectuée en réduisant le nombre de coefficients audit nombre utile, la deuxième variante prévoit une mise à zéro des coefficients au-delà du nombre de coefficients utiles, c'est-à-dire réellement nécessaires.

La discrimination permettant de fixer le nombre de coefficients peut se faire sur une estimation instantanée du paramètre d'étalement temporel. Ceci étant un moyennage de cette estimation permet une discrimination plus fiable.

La prise en compte du paramètre d'étalement temporel pour déterminer le nombre de coefficients utiles de la réponse impulsionnelle, peut s'effectuer par exemple en comparant le paramètre d'étalement temporel évalué à plusieurs valeurs prédéterminées de paramètres d'étalement correspondant respectivement à des étalements différents du canal de transmission. Ceci est par ailleurs équivalent à une comparaison du paramètre d'étalement temporel à une ou plusieurs valeurs de seuil prédéterminées.

L'invention propose également un dispositif d'estimation de la réponse impulsionnelle d'un canal de transmission d'informations, comprenant un étage de traitement comportant des moyens d'évaluation aptes à évaluer un nombre utile de coefficients de la réponse impulsionnelle du canal en fonction des caractéristiques réelles du canal de transmission.

Selon un mode de réalisation, l'étage de traitement comporte des premiers moyens d'estimation aptes à effectuer une première estimation de la réponse impulsionnelle du canal de transmission en utilisant une valeur maximale prédéterminée pour le nombre de coefficients.

Les moyens d'évaluation sont aptes à évaluer un paramètre d'étalement temporel du canal de transmission pour obtenir ledit nombre utile de coefficients, et l'étage de traitement comporte des deuxièmes moyens d'estimation apte à élaborer une estimation finale de la réponse impulsionnelle du canal de transmission en tenant compte du nombre utile de coefficients.

Selon un mode de réalisation de l'invention, les deuxièmes moyens d'estimation sont aptes à élaborer ladite estimation finale en effectuant une nouvelle estimation utilisant le nombre utile de coefficients.

Selon un autre mode de réalisation de l'invention, les deuxièmes moyens d'estimation comportent des moyens de correction aptes à corriger la première estimation en annulant un nombre de coefficients égal à la différence entre ladite valeur maximale et ledit nombre utile, les coefficients annulés étant ceux associés aux versions du signal transmis, temporellement les plus retardés.

Selon un mode de réalisation de l'invention, les moyens d'évaluation comportent une mémoire stockant différentes valeurs de seuil ou plusieurs valeurs prédéterminées de paramètre d'étalement correspondant respectivement à des étalements différents du canal de transmission et un comparateur apte à comparer la valeur du paramètre d'étalement temporel évalué avec le contenu de la mémoire.

L'invention a également pour objet un téléphone mobile cellulaire, incorporant un dispositif d'estimation de la réponse impulsionnelle d'un canal de transmission d'informations, tel que défini ci-avant.

L'invention propose également un programme d'ordinateur, comprenant des moyens de code-programme mettant en oeuvre le procédé d'estimation tel que défini ci-avant lorsque ledit programme est exécuté au sein d'un processeur.

L'invention propose encore un support, par exemple une mémoire morte, capable d'être lue par un processeur, et contenant des moyens de code-programme aptes à mettre en oeuvre le procédé d'estimation tel que défini ci-avant lorsque ledit programme est exécuté au sein du processeur.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre schématiquement les constituants essentiels d'un émetteur et d'un récepteur selon l'invention, aptes à mettre en oeuvre le procédé selon l'invention;
- la figure 2 illustre plus en détail, mais toujours schématiquement, une partie des moyens du récepteur de la figure 1;
- la figure 3 est un organigramme très simplifié d'un mode de mise en oeuvre du procédé selon l'invention ;
- les figures 4 et 5 illustrent plus en détails mais toujours très schématiquement deux variantes de l'invention pour l'élaboration de l'estimation finale de la réponse impulsionnelle du canal, et,
- les figures 6 à 8 représentent des courbes illustrant les avantages et effets de l'invention pour différents types de trajets.

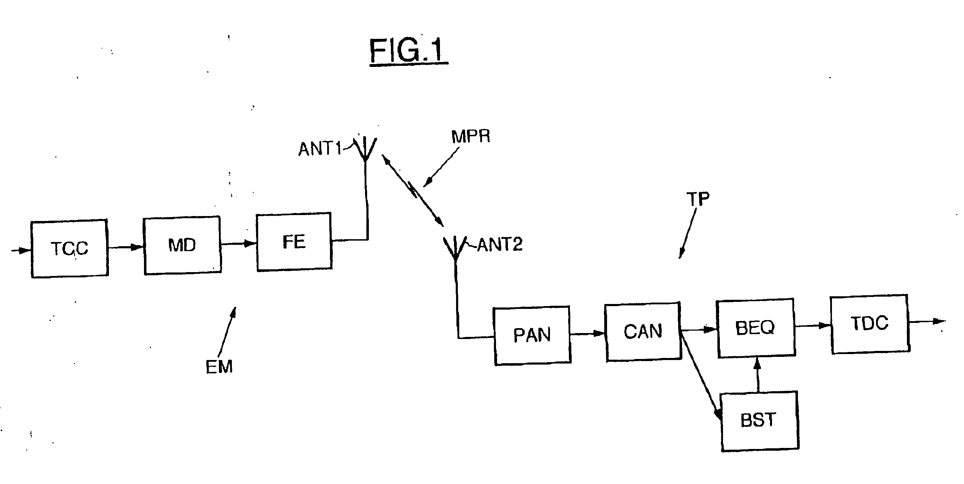

On suppose maintenant, en se référant plus particulièrement à la figure 1, que l'invention s'applique par exemple au domaine des téléphones mobiles cellulaires, par exemple ceux du réseau GSM ou de son extension EDGE.

Sur la figure 1, la référence EM désigne un émetteur comportant en amont un bloc de codage TCC, recevant les données utiles à transmettre, par exemple de la parole, et effectuant notamment des traitements classiques dits "de codage de canal" en introduisant des redondances dans le flot de données. La sortie du bloc TCC consiste en des blocs d'informations binaires.

Le bloc TCC est suivi classiquement d'un modulateur effectuant par exemple une modulation en quadrature du type QPSK ou 8PSK, selon une dénomination bien connue de l'homme du métier et transformant le signal binaire en un signal analogique. Ce signal analogique est ensuite filtré dans un filtre d'émission FE avant d'être émis en direction du récepteur via une antenne ANT1.

Le moyen de propagation MPR entre un émetteur EM et un récepteur TP, constitué ici d'un téléphone mobile cellulaire, est dans le cas présent l'air.

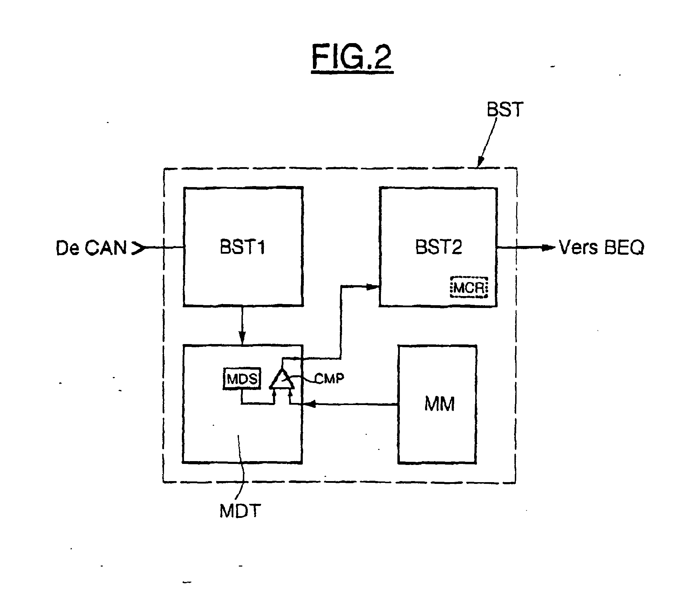

Le récepteur TP, ou téléphone mobile cellulaire, comporte essentiellement en tête une antenne ANT2 couplée à un étage analogique PAN réalisant essentiellement une conversion de fréquence pour ramener le signal modulé reçu en bande de base, et un filtrage pour ne conserver que la partie utile du spectre. Après échantillonnage et conversion analogique numérique dans un convertisseur CAN, l'étage numérique a pour rôle de produire une estimation du canal de transmission (étage de traitement BST dont la structure plus détaillée sur la figure 2 sera décrite ci-après), de supprimer grâce à cette estimation interférence entre symboles (par une égalisation effectuée dans un bloc BEQ), et d'effectuer en général une correction d'erreur, c'est-à-dire un décodage classique de canal (bloc TDC) basé par exemple sur un décodeur de Viterbi.

Au sens de la présente invention, le canal de transmission est formé des éléments situés en amont de l'estimateur de canal, c'est-à-dire notamment des dispositifs analogiques d'émission et de réception ainsi que du moyen de propagation physique proprement dit MPR. Il convient de noter ici qu'il est également possible de trouver et de prendre en compte des traitements numériques (filtrage par exemple) effectués en amont de l'estimateur de canal mais en aval de l'étage de réception analogique.

La réponse impulsionnelle du canal est en fait le produit de la réponse impulsionnelle de l'émetteur, de la réponse impulsionnelle du moyen de propagation proprement dit et de la réponse impulsionnelle du récepteur.

La réponse impulsionnelle H du canal de transmission pris dans sa globalité est un polynôme en $z^{-1}$ ayant un

nombre utile de coefficients complexes $h_i$ a priori inconnu. Ce nombre utile de coefficients complexes dépend notamment de l'environnement de propagation du signal (trajets collineux, urbain, ...). Du point de vue propagation, le milieu collineux est un pire cas par rapport au milieu urbain ou par rapport à un trajet statique sans réflexion par exemple.

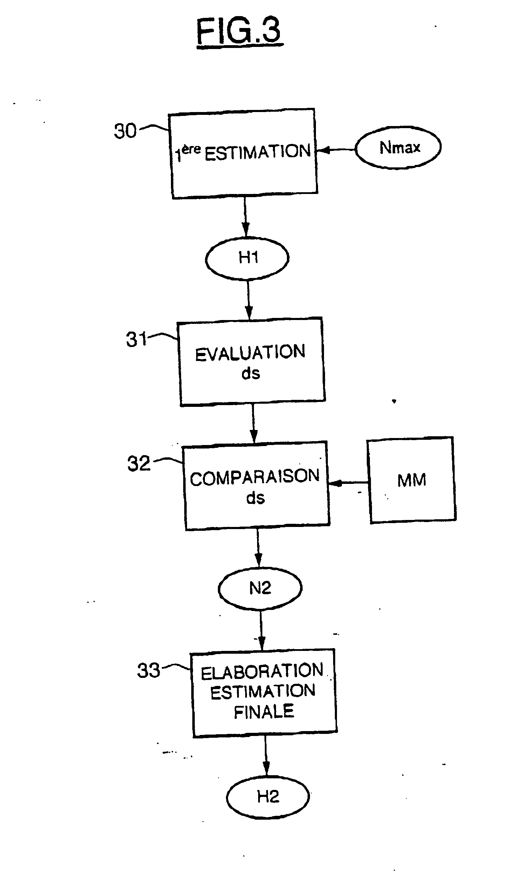

Selon l'invention, comme illustré plus particulièrement sur la figure 3, une première estimation H1 de la réponse impulsionnelle du canal de transmission pris dans sa globalité va tout d'abord être estimée (étape 30) en utilisant un nombre Nmax de coefficients correspondant à un nombre maximum de coefficients pour un pire cas de propagation, par exemple pour un trajet collineux.

Dans l'exemple décrit, Nmax est égal à 8.

H1(z) est donc défini par la formule (I) ci-dessous :

$$H1(z) = h_0 + h_1\, z^{-1} + \ldots\ldots + h_7\, z^{-7} \qquad (I)$$

Cette première estimation est effectuée de façon classique. Plus précisément, si cette première estimation est une estimation dite "entraînée", c'est-à-dire utilisant des séquences d'apprentissage formées de succession de bits de valeur connue, chaque séquence de signal reçu R est définie par la formule matricielle (II) ci-dessous :

$$R = S\,.\,H1 + N \qquad (II)$$

dans laquelle S désigne la matrice représentative de la séquence d'apprentissage, H1 représente le vecteur formé des coefficients $h_0$-$h_7$ et N un vecteur additionnel représentatif notamment des interférences et du bruit thermique.

Une façon classique de résoudre ce système, c'est-à-dire d'estimer les coefficients $h_i$ de la réponse impulsionnelle H1 du canal pris dans sa globalité, consiste à utiliser une méthode des moindres carrés qui vise à déterminer H1 comme étant le vecteur minimisant la norme (euclidienne) du vecteur N. L'homme du métier sait alors que le vecteur H1 est défini par la formule (III) ci-dessous :

$$H = (S^*S)^{-1}\, S^*\, R \qquad (III)$$

dans laquelle l'annotation "*" désigne la matrice transposée complexe conjuguée.

Bien entendu, d'autres méthodes sont également utilisables pour estimer les coefficients $h_i$ de la réponse impulsionnelle du canal pris dans sa globalité. Ces autres méthodes sont également bien connues de l'homme du métier et l'on ne reviendra pas plus en détail ici sur ces autres méthodes.

Il est également possible d'utiliser des estimations dites "aveugles", c'est-à-dire dans lesquelles on n'utilise pas de séquences d'apprentissage prédéterminées.

L'homme du métier connaît également diverses méthodes permettant d'effectuer des estimations aveugles de la réponse impulsionnelle H d'un canal pris dans sa globalité. A titre indicatif, on peut citer l'article de Jitendra K. Tugnait, intitulé "Blind Estimation Of Digital Communication Channel Impulse Response", IEEE Transactions On Communications, Vol. 42, N°2/3/4, février/mars/avril 1994.

L'estimation de canal est effectuée dans un bloc BST (figure 2). Plus précisément, la première estimation est effectuée dans un sous-bloc BST1 du bloc BST. Matériellement, l'ensemble du bloc BST peut être réalisé par exemple par un processeur de traitement du signal, les traitements effectués dans le bloc BST1 étant réalisés de façon logicielle. Ces traitements sont alors sous forme de codes-programme pouvant être aisément écrits par l'homme du métier à partir de la définition fonctionnelle de ces traitements. Les moyens de code-programme sont alors par exemple stockés dans une mémoire morte associée au processeur. Ceci étant, une réalisation entièrement matérielle (hardware) du bloc BST est également possible, par exemple sous forme d'un circuit intégré spécifique (ASIC).

Une fois cette première estimation H1 obtenue, on va évaluer le nombre utile N2 de coefficients de la réponse impulsionnelle du canal, en tenant compte des caractéristique réelles du canal de transmission, c'est-à-dire de l'environnement réel dans lequel se situe le téléphone mobile, au sein de moyens d'évaluation MDT.

Pour ce faire, les moyens d'évaluation MDT vont évaluer, dans un moyen MDS, un paramètre d'étalement temporel ds du canal de transmission en utilisant par exemple la formule IV ci-dessous :

$$ds = \left( \sum_{i=0}^{Nmax} (i - moy)^2 h_i^2 \right)^{1/2} \quad \text{(IV)}$$

dans laquelle le terme "moy" est défini par la formule V ci-dessous :

$$moy = \left( \sum_{i=0}^{Nmax} i\, h_i^2 \right) / \left( \sum_{i=0}^{Nmax} h_i^2 \right) \quad \text{(V)}$$

Une fois cette étape d'évaluation 31 terminée, les moyens d'évaluation MDT vont comparer (étape 32) dans un comparateur CMP, la valeur obtenue pour le paramètre d'étalement temporel avec plusieurs valeurs prédéfinies de paramètres d'étalement stockées dans une mémoire MM de l'étage de traitement BST.

A titre d'exemple, la mémoire MM contient une valeur égale à 0,55 correspondant à un paramètre d'étalement d'un multi-trajets "statique", une valeur égale à 0,65 correspondant à un multi-trajet sde type urbain et une valeur égale à 1,43 correspondant à un paramètre d'étalement d'un multi-trajets collineux.

En fonction du résultat de cette comparaison, les moyens d'évaluation vont en déduire le nombre N2 de coefficients utiles de la réponse impulsionnelle du canal en fonction du type de multi-trajets sélectionné. Ainsi, si la valeur 0,55 a été sélectionnée, le nombre N2 de coefficients utiles sera pris par exemple égal à 4 tandis qu'il sera pris égal à 6 pour un trajet de type urbain et qu'il sera conservé égal à 8 pour un trajet de type collineux.

En pratique, on pourra utiliser des seuils de comparaison plus larges. Ainsi, par exemple, si la valeur obtenue est inférieure à 0,6, N2 sera pris égal à 4. Si la valeur obtenue est comprise entre 0,6 et 1, N2 sera pris égal à 6, et à 8 si la valeur obtenue est supérieure à 1.

On suppose à titre d'exemple que le téléphone mobile se trouve à l'instant d'évaluation dans un trajet de type urbain. En conséquence, la réponse impulsionnelle du canal est un polynôme en $z^{-1}$ de degré 5, à 6 coefficients complexes $h_0$-$h_5$.

Les deuxièmes moyens d'estimation BST2 vont alors élaborer (étape 33) l'estimation finale H2 de la réponse impulsionnelle du canal.

A cet égard, deux variantes sont possibles.

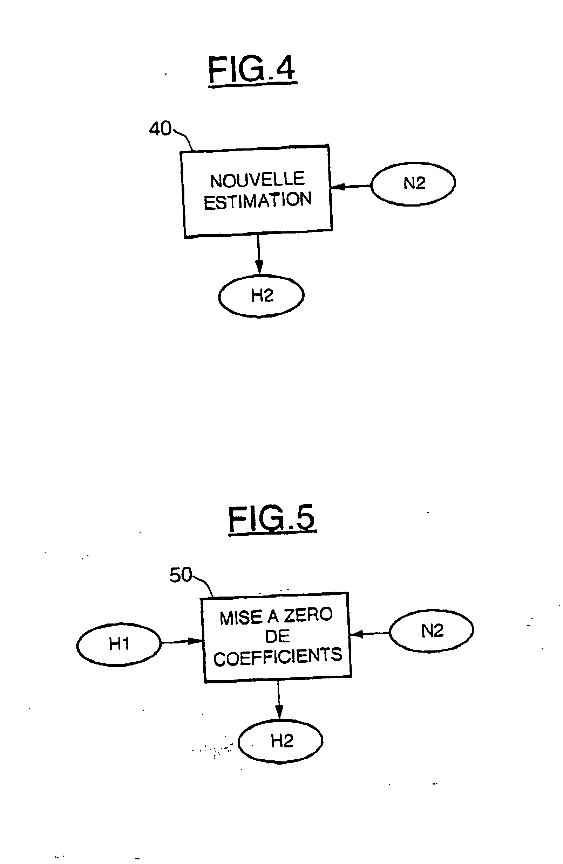

Une première variante, illustrée sur la figure 4, consiste à effectuer une nouvelle estimation de la réponse impulsionnelle du canal en utilisant cette fois-ci le nombre N2 de coefficients, c'est-à-dire en l'espèce 6 coefficients. Cette nouvelle estimation peut s'effectuer par toute méthode classique. Les moyens BST2 peuvent alors comporter des moyens de structure analogue à celle des moyens BST1. Bien entendu, il serait également possible d'utiliser les moyents BST1 pour cette nouvelle estimation.

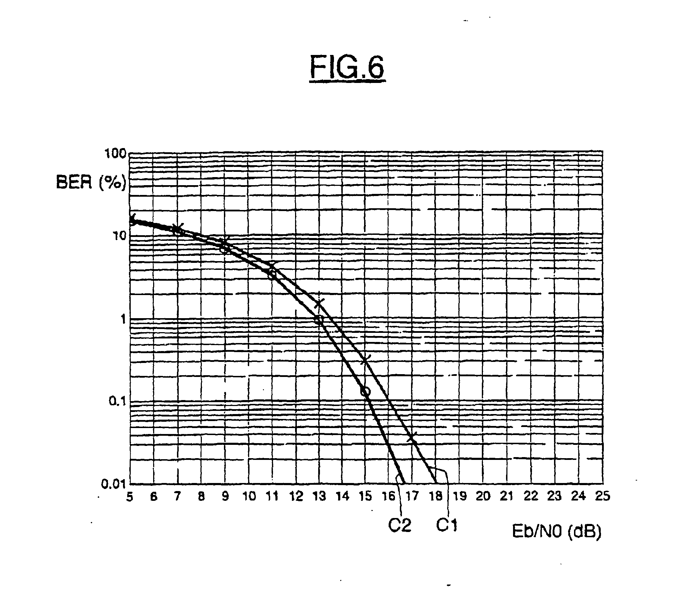

Une autre variante illustrée sur la figure 5, consiste à mettre à zéro les coefficients inutiles de la réponse impulsionnelle H1 du canal, c'est-à-dire en l'espèce les coefficients $h_6$ et $h_7$ correspondant aux versions temporellement les plus retardées du signal. Cette mise à zéro est effectuée par exemple dans des moyens de correction MCR.

Les figures 6 à 8 illustrent des courbes montrant l'évolution du taux d'erreur binaire (BER) par rapport au rapport Eb/N0 pour différents types de multi-trajets dans un système de téléphonie mobile utilisant la modulation EGPRS (ou EDGE) (débit maximum de 52,2 Kbits par seconde par intervalle temporel).

Eb désigne l'énergie par bit et N0 désigne la densité de puissance du bruit par hertz.

La figure 6 correspond à un multi-trajet statique. La courbe C1 correspond à une réponse impulsionnelle du canal estimé selon l'art antérieur avec un nombre maximum de coefficients. La courbe C2 correspond à une réponse impulsionnelle estimée selon l'invention avec un nombre adapté de coefficients. On remarque donc que l'invention permet d'obtenir un taux d'erreur binaire plus réduit, notamment pour les forts signaux.

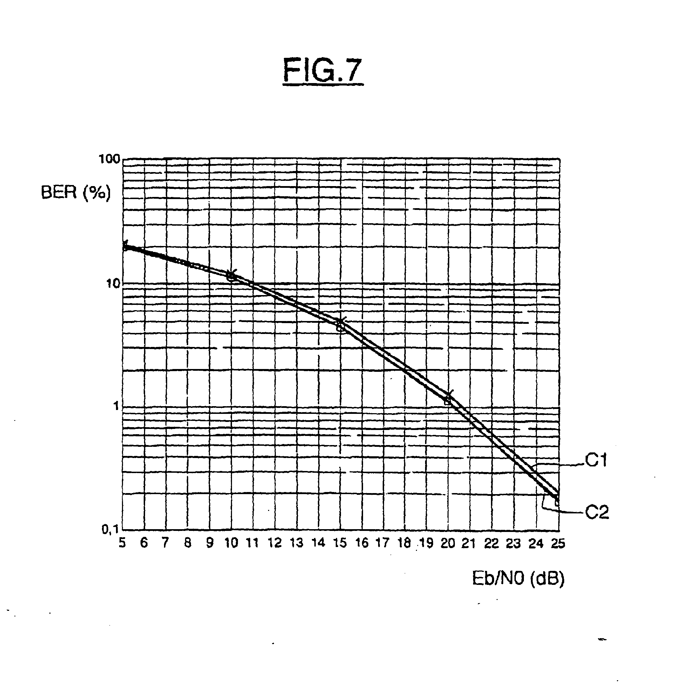

Il en est de même pour la courbe C2 de la figure 7 qui correspond à une réponse impulsionnelle estimée selon l'invention avec un nombre adapté de coefficients pour un trajet urbain. La courbe C1 correspond à une réponse impulsionnelle de canal estimée avec un nombre maximum de coefficients.

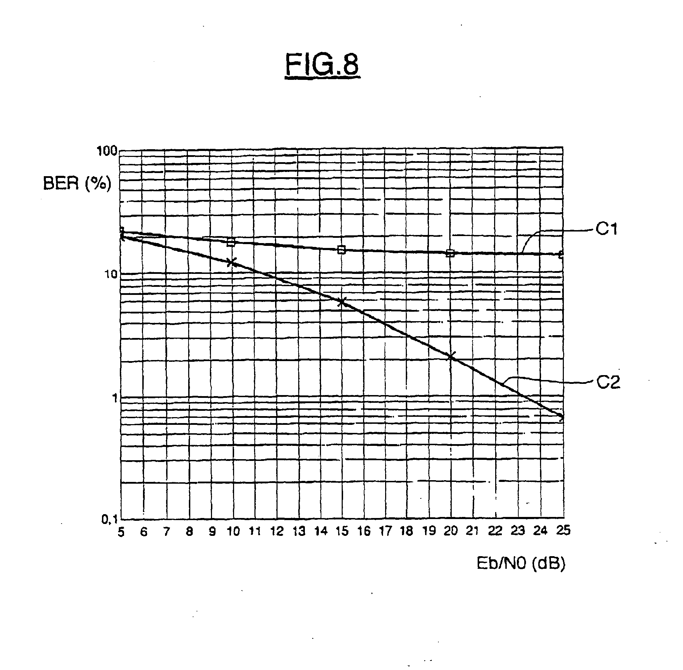

Enfin, la courbe C1 de la figure 8 représente une réponse impulsionnelle d'un canal de transmission estimée selon l'art antérieur avec un nombre réduit de coefficients alors que l'environnement est du type collineux. En effet, pour des raisons de coût et de complexité, notamment pour une modulation M-aire avec M supérieur à 2 (modulation 8 PSK par exemple), certains dispositifs de l'art antérieur réduisent a priori le nombre maximum coefficients de la réponse impulsionnelle du canal, ce qui conduit alors à des imprécisions pour des environnements collineux. La courbe C2 de la figure 8 correspond à une réponse impulsionnelle estimée selon l'invention, pour un même terrain collineux, mais avec un nombre adapté de coefficients, c'est-à-dire plus important en l'espèce.

Ce sont les coefficients du polynôme H2 qui seront utilisés dans le bloc d'égalisation BEQ du téléphone TP (figure 1).

Parmi les traitements d'égalisation, on peut considérer deux grandes classes :

- celles qui font la détection symbole par symbole, comme par exemple l'algorithme connu par l'homme du métier sous le vocable DFE (Décision Feedback Equalisation) et dont les aspects essentiels sont par exemple décrits dans l'ouvrage de John G. Proakis, intitulé "Digital Communications", troisième édition, McGraw-Hill, Inc.,

- et celles qui font de la détection de séquence de symboles, comme par exemple l'algorithme connu sous le vocable MLSE ("Maximum-Likelihood Sequence Estimation"), ou celui connu sous le vocable DFSE ("Decision Feedback Sequence Estimation" en langue anglaise), également bien connu de l'homme du métier. Ces deux algorithmes ont fait l'objet de nombreuses publications. L'homme du métier pourra notamment se référer, en ce qui concerne l'algorithme MLSE, à l'ouvrage de John G. Proakis précité, et en ce qui concerne l'algorithme DFSE, à l'article de Hans C. Guren et Nils Holte, intitulé "Decision Fcedback Sequence Estimation for Continuous Phase Modulation on a Linear Multipath Channel", IEEE Transactions on Communications, Vol. 41, N° 2, Février 1993.

Les algorithmes de détection symbole par symbole, ont une complexité très faible par rapport aux algorithmes de détection par séquence, mais donnent des performances inférieures.

C'est la raison pour laquelle il est généralement choisi de préférence des algorithmes d'égalisation utilisant une estimation par séquence.

Les bits du train d'impulsion ainsi délivrés après égalisation sont ensuite décodés dans le bloc de décodage de canal TDC.

Les algorithmes d'égalisation et ceux de décodage de canal sont par exemple également exécutés par le processeur de traitement du signal.

L'invention n'est pas limitée aux modes de réalisation et de mise en oeuvre décrits ci-avant, mais en embrasse toutes les variantes

Par ailleurs, le dispositif d'estimation selon l'invention peut non seulement être incorporé dans un téléphone mobile cellulaire, mais aussi dans la chaîne de réception d'une station de base ou plus généralement dans tout récepteur d'informations numériques.

### Revendications

1. Procédé d'estimation de la réponse impulsionnelle comprenant une première estimation (30) de la réponse impulsionnelle, une évaluation du nombre utile (N2) de coefficients de la réponse impulsionnelle du canal en fonction des caractéristiques réelles du canal de transmission et une estimation finale (H2) de la réponse impulsionnelle du canal de transmission en fonction dudit nombre utile de coefficients, **caractérisé par le fait que** pour la première estimation (30), on utilise une valeur maximale prédéterminée (Nmax) pour le nombre de coefficients de cette réponse impulsionnelle, et **par le fait que** l'évaluation du nombre utile de coefficients comprend l'évaluation d'un paramètre d'étalement temporel (ds) du canal de transmission.

2. Procédé selon la revendication 1, **caractérisé par le fait qu'**on élabore ladite estimation finale en effectuant une nouvelle estimation (40) de la réponse impulsionnelle du canal de transmission utilisant ledit nombre utile de coefficients.

3. Procédé selon la revendication 1, **caractérisé par le fait qu'**on élabore ladite estimation finale en corrigeant (50) ladite première estimation par une annulation d'un nombre de coefficients estimés égal à la différence entre ladite valeur maximale et ledit nombre utile, les coefficients annulés étant ceux associés aux versions du signal transmis temporellement les plus retardées.

4. Procédé selon l'une des revendications 1 à 3, **caractérisé par le fait qu'**on évalue le nombre utile (N2) de coefficients en comparant le paramètre d'étalement temporel évalué (ds) à plusieurs valeurs prédéterminées de paramètres d'étalement correspondant respectivement à des étalements temporels différents du canal de transmission.

5. Dispositif d'estimation de la réponse impulsionnelle d'un canal de transmission d'informations comprenant un étage de traitement (BST) comportant des premiers moyens d'estimation (BST1) aptes à effectuer une première estimation (30) de la réponse impulsionnelle du canal de transmission, des moyens d'évaluation (MDT) aptes à évaluer un nombre utile (N2) de coefficients de la réponse impulsionnelle du canal en fonction des caractéristiques réelles du canal de transmission et des deuxièmes moyens d'estimation (BST2) aptes à élaborer une estimation finale (H2) de la réponse impulsionnelle du canal de transmission en tenant compte dudit nombre utile de coefficients, **caractérisé par le fait que** les premiers moyens (BST1) utilisent une valeur maximale prédéterminée (Nmax) pour le nombre de coefficients de cette réponse impulsionnelle pour effectuer ladite première estimation de la réponse impulsionnelle du canal de transmission et **par le fait que** les moyens d'évaluation sont aptes à évaluer un paramètre d'étalement temporel (ds) du canal de transmission pour obtenir ledit nombre utile (N2) de coefficients.

6. Dispositif selon la revendication 5, **caractérisé par le fait que** les deuxièmes moyens d'estimation (BTS2) sont aptes à élaborer ladite estimation finale en effectuant une nouvelle estimation de la réponse impulsionnelle du canal de transmission utilisant ledit nombre utile de coefficients.

7. Dispositif selon la revendication 5, **caractérisé par le fait que** les deuxièmes moyens d'estimation (BTS2) comportent des moyens de correction (MCR) aptes à corriger ladite première estimation par une annulation d'un nombre de coefficients estimés égal à la différence entre ladite valeur maximale et ledit nombre utile, les coefficients annulés étant ceux associés aux versions du signal transmis temporellement les plus retardées.

8. Dispositif selon l'une des revendications 5 à 7 **caractérisé par le fait que** les moyens d'évaluation (MDT) comportent une mémoire (MM) contenant plusieurs valeurs prédéterminées de paramètres d'étalement correspondant respectivement à des étalements temporels différents du canal de transmission, et un comparateur apte à comparer le paramètre d'étalement temporel évalué avec le contenu de ladite mémoire.

9. Récepteur d'informations numériques, **caractérisé par le fait qu'**il incorpore un dispositif tel que défini dans l'une des revendications 5 à 8.

10. Récepteur selon la revendication 9, **caractérisé par le fait qu'**il est constitué d'un téléphone mobile cellulaire.

11. Programme d'ordinateur comprenant des moyens de code-programme mettant en oeuvre le procédé tel que défini dans l'une des revendications 1 à 4 lorsque ledit programme est exécuté au sein d'un processeur.

12. Support, capable d'être lu par un processeur , et contenant des moyens de code-programme aptes à mettre en oeuvre le procédé tel que défini dans l'une des revendications 1 à 4 lorsque ledit programme est exécuté au sein du processeur.

**Claims**

1. Method of estimating the impulse response comprising a first estimate (30) of the impulse response, an evaluation of the useful number (N2) of coefficients of the impulse response of the channel as a function of the actual characteristics of the transmission channel and a final estimate (H2) of the impulse response of the transmission channel as a function of the said useful number of coefficients, **characterized in that**, for the first estimate (30), a predetermined maximum value (Nmax) for the number of coefficients of this impulse response is used and **in that** the evaluation of the useful number of coefficients comprises the evaluation of a time-domain spreading parameter (ds) of the transmission channel.

2. Method according to Claim 1, **characterized in that** the said final estimate is derived by producing a new estimate (40) of the impulse response of the transmission channel using the said useful number of coefficients.

3. Method according to Claim 1, **characterized in that** the said final estimate is produced by correcting (50) the said first estimate via a cancellation of a number of estimated coefficients equal to the difference between the said maximum value and the said useful number, the cancelled coefficients being those associated with the versions of the transmitted signal which are the most delayed in time.

4. Method according to one of Claims 1 to 3, **characterized in that** the useful number (N2) of coefficients is estimated by comparing the time-domain spreading parameter (ds) evaluated with several predetermined values of spreading parameters corresponding respectively to different time-domain spreadings of the transmission channel.

**5.** Device for estimating the impulse response of an information-transmission channel comprising a processing stage (BST) including first estimating means (BST1) able to produce a first estimate (30) of the impulse response of the transmission channel, evaluation means (MDT) able to evaluate a useful number (N2) of coefficients of the impulse response of the channel as a function of the actual characteristics of the transmission channel and second estimating means (BST2) able to derive a final estimate (H2) of the impulse response of the transmission channel by taking account of the said useful number of coefficients, **characterized in that** the first means (BST1) use a predetermined maximum value (Nmax) for the number of coefficients of this impulse response in order to effect the said first estimate of the impulse response of the transmission channel and **in that** the evaluation means are able to evaluate a time-domain spreading parameter (ds) of the transmission channel in order to obtain the said useful number (N2) of coefficients.

**6.** Device according to Claim 5, **characterized in that** the second estimating means (BST2) are able to derive the said final estimate by producing a new estimate of the impulse response of the transmission channel using the said useful number of coefficients.

**7.** Device according to Claim 5, **characterized in that** the second estimating means (BST2) include correction means (MCR) able to correct the said first estimate via a cancellation of a number of estimated coefficients equal to the difference between the said maximum value and the said useful number, the cancelled coefficients being those associated with the versions of the transmitted signal which are the most delayed in time.

**8.** Device according to one of Claims 5 to 7, **characterized in that** the evaluation means (MDT) include a memory (MM) containing several predetermined values of spreading parameters corresponding respectively to different time-domain spreadings of the transmission channel, and a comparator able to compare the time-domain spreading parameter evaluated with the contents of the said memory.

**9.** Digital information receiver, **characterized in that** it incorporates a device as defined in one of Claims 5 to 8.

**10.** Receiver according to Claim 9, **characterized in that** it consists of a cellular mobile telephone.

**11.** Computer program comprising program-code means implementing the method as defined in one of Claims 1 to 4 when the said program is run on a processor.

**12.** Medium capable of being read by a processor and containing program-code means able to implement the method as defined in one of Claims 1 to 4 when the said program is run on the processor.

**Patentansprüche**

**1.** Verfahren zur Schätzung der Impulsantwort mit
einer ersten Schätzung (30) der Impulsantwort,
einer Ermittlung der nützlichen Anzahl (N2) von Koeffizienten der Impulsantwort des Kanals als Funktion der tatsächlichen Eigenschaften des Übertragungskanals und
einer endgültigen Schätzung (H2) der Impulsantwort des Übertragungskanals als Funktion der nützlichen Anzahl von Koeffizienten,
**dadurch gekennzeichnet, daß** für die erste Schätzung (30) ein vorgegebener maximaler Wert (Nmax) für die Anzahl von Koeffizienten dieser Impulsantwort verwendet wird, und
**dadurch**, daß die Ermittlung der nützlichen Anzahl von Koeffizienten die Ermittlung eines Zeitdehnungsparameters (ds) des Übertragungskanals aufweist.

**2.** Verfahren nach Anspruch 1, **dadurch gekennzeichnet, daß** die endgültige Schätzung **dadurch** ausgearbeitet wird, daß eine neue Schätzung (40) der Impulsantwort des Übertragungskanals unter Verwendung der nützlichen Anzahl von Koeffizienten durchgeführt wird.

**3.** Verfahren nach Anspruch 1, **dadurch gekennzeichnet, daß** die endgültige Schätzung **dadurch** ausgearbeitet wird, daß die erste Schätzung mittels einer Annullierung einer Anzahl von geschätzten Koeffizienten korrigiert wird (50), die gleich der Differenz zwischen dem maximalen Wert und der nützlichen Anzahl ist, wobei die annullierten Koeffizienten diejenigen sind, die zu den zeitlich am stärksten verzögerten Versionen des übertragenen Signals gehören.

4.  Verfahren nach einem der Ansprüche 1 bis 3, **dadurch gekennzeichnet, daß** die nützliche Anzahl (N2) von Koeffizienten durch Vergleichen des ermittelten Zeitdehnungsparameters (ds) mit mehreren vorgegebenen Werten von Dehnungsparametern, die jeweils unterschiedlichen Zeitdehnungen des Übertragungskanals entsprechen, ausgearbeitet wird.

5.  Vorrichtung zur Schätzung der Impulsantwort eines Nachrichtenübertragungskanals mit einer Verarbeitungsstufe (BST), die aufweist:

    erste Schätzeinrichtungen (BST1), die eine erste Schätzung (30) der Impulsantwort des Übertragungskanals durchführen können,
    Ermittlungseinrichtungen (MDT), die eine nützliche Anzahl (N2) von Koeffizienten der Impulsantwort des Kanals als Funktion der tatsächlichen Eigenschaften des Übertragungskanals ermitteln können, und
    zweite Schätzeinrichtungen (BST2), die unter Berücksichtigung der nützlichen Anzahl von Koeffizienten eine endgültige Schätzung (H2) der Impulsantwort des Übertragungskanals ausarbeiten können,
    **dadurch gekennzeichnet, daß**
    die ersten Einrichtungen (BST1) einen vorgegebenen maximalen Wert (Nmax) für die Anzahl von Koeffizienten dieser Impulsantwort verwenden, um die erste Schätzung der Impulsantwort des Übertragungskanals durchzuführen, und **dadurch**, daß die Ermittlungseinrichtungen einen Zeitdehnungsparameter (ds) des Übertragungskanals ermitteln können, um die nützliche Anzahl (N2) von Koeffizienten zu gewinnen.

6.  Vorrichtung nach Anspruch 5, **dadurch gekennzeichnet, daß** die zweiten Schätzeinrichtungen (BST2) die endgültige Schätzung durch Durchführen einer neuen Schätzung der Impulsantwort des Übertragungskanals unter Verwendung der nützlichen Anzahl von Koeffizienten ausarbeiten können.

7.  Vorrichtung nach Anspruch 5, **dadurch gekennzeichnet, daß** die zweiten Schätzeinrichtungen (BST2) Korrektureinrichtungen (MCR) aufweisen, die die erste Schätzung durch Annullierung einer Anzahl von geschätzten Koeffizienten korrigieren können, die gleich der Differenz zwischen dem maximalen Wert und dem nützlichen Wert ist, wobei die annullierten Koeffizienten diejenigen sind, die zu den zeitlich am stärksten verzögerten Versionen des übertragenen Signals gehören.

8.  Vorrichtung nach einem der Ansprüche 5 bis 7, **dadurch gekennzeichnet, daß** die Ermittlungseinrichtungen (MDT) einen Speicher (MM), der mehrere vorgegebene Werte von Dehnungsparametern enthält, die jeweils unterschiedlichen Zeitdehnungen des Übertragungskanals entsprechen, und einen Komparator aufweisen, der den ermittelten Zeitdehnungsparameter mit dem Inhalt des Speichers vergleichen kann.

9.  Empfänger für digitale Nachrichten, **dadurch gekennzeichnet, daß** er eine Vorrichtung aufweist, wie sie in einem der Ansprüche 5 bis 8 definiert ist.

10. Empfänger nach Anspruch 9, **dadurch gekennzeichnet, daß** er Teil eines zellularen Mobiltelefons ist.

11. Computerprogramm, das Programmcodemittel aufweist, die das Verfahren, wie es in einem der Ansprüche 1 bis 4 definiert ist, durchführen, wenn das Programm in einem Prozessor abläuft.

12. Datenträger, der von einem Prozessor gelesen werden kann und Programmcodemittel aufweist, die das Verfahren, wie es in einem der Ansprüche 1 bis 4 definiert ist, durchführen können, wenn das Programm in dem Prozessor abläuft.

# FIG.1

EP 1 206 091 B1

# FIG.2

BST

De CAN ⟩ → BST1 → BST2 → Vers BEQ

MCR

MDS △ CMP

MM

MDT

# FIG.3

30 — [ 1$^{\text{ère}}$ ESTIMATION ] ← ( Nmax )

↓

( H1 )

↓

31 — [ EVALUATION ds ]

↓

32 — [ COMPARAISON ds ] ← [ MM ]

↓

( N2 )

↓

33 — [ ELABORATION ESTIMATION FINALE ]

↓

( H2 )

## FIG.4

40

NOUVELLE ESTIMATION ← N2

↓

H2

## FIG.5

50

H1 → MISE A ZERO DE COEFFICIENTS ← N2

↓

H2

# FIG.6

# FIG.7

## FIG.8